# EUROPEAN PATENT SPECIFICATION

(11) **EP 3 547 497 B1**
(45) Date of publication and mention of the grant of the patent: **23.12.2020**
(21) Application number: 19156446.7
(22) Date of filing: 11.02.2019
(51) Int. Cl.: H02J 50/12, H02J 7/02

(54) **CONTACTLESS POWER SUPPLY DEVICE**
KONTAKTLOSE ENERGIEVERSORGUNGSVORRICHTUNG
DISPOSITIF D'ALIMENTATION ÉLECTRIQUE SANS CONTACT

(30) Priority: 27.03.2018 JP 2018060309
(43) Date of publication of application: 02.10.2019
(73) Proprietor: OMRON Corporation, Shiokoji-dori, Shimogyo-Ku Kyoto-shi Kyoto 600-8530 (JP)
(72) Inventor: Nakao, Goro, Kyoto-shi, KYOTO, Kyoto 600-8530 (JP); Kawai, Yusuke, Kyoto-shi, KYOTO, Kyoto 600-8530 (JP); Nomura, Atsushi, Kyoto-shi, KYOTO, Kyoto 600-8530 (JP); Zaitsu, Toshiyuki, Kyoto-shi, KYOTO, Kyoto 600-8530 (JP)
(74) Representative: Kilian Kilian & Partner

(56) References cited:
- EP-A2- 2 066 013
- JP-A- 2012 090 476
- US-A1- 2014 354 074
- US-A1- 2016 134 131

## Description

### [Technical Field]

The present invention relates to a contactless power supply device.

### [Background Art]

In the past, the so-called technique of contactless power supply (also referred to as wireless power supply) for transmitting electric power through space without passing through metal contact points, or the like, has been studied.

In the contactless power supply device, a coil operating as a part of a transformer (hereinafter referred to as a transmitter coil) is provided on a primary side (power transmission side), and a coil operating as another part of the transformer (hereinafter referred to as a receiving coil) is provided on a secondary side (power receiving side). Thus, the power transmission side apparatus supplies alternating current to the transmitter coil, whereby electric power is transmitted from the transmitter coil to the receiving coil.

In contactless power supply, the power transmission efficiency is expressed as the product of the degree of coupling k between the transmitter coil and the receiving coil and the Q factor which indicates the resonance strength. Therefore, it is necessary to increase the Q factor to improve the power transmission efficiency. Particularly, if electric power is received via a resonance circuit in which the receiving coil and the capacitor are in parallel resonance on the power receiving side, it is necessary to increase the voltage of the transmitted electric power to increase the Q factor.

However, if the load circuit driven by the electric power supplied through the resonance circuit on the power receiving side does not require a high voltage, a DC/DC converter provided between the resonance circuit and the load circuit is required to lower the voltage of the supplied electric power. But when the voltage is lowered by the DC/DC converter, a power loss occurs which is undesirable depending on the application.

On the other hand, a technique has been proposed which, among a first control that regulates the transmitted electric power to the target electric power by adjusting the duty period of the output voltage of the inverter provided on the power transmission side and a second control that regulates the transmitted electric power to the target electric power by adjusting the step-up ratio of the power factor correction circuit provided on the power transmission side, implements the first control, if the target power is a first electric power, and implements the second control, if the target power is a second electric power which is smaller than the first electric power (see, for example, Patent Document 1).

### [Prior art literature]

### [Patent literature]

[Patent document 1] Japanese Published Unexamined Patent Application No. 2017-34950

### [Summary of the Invention]

### [Problem to be Solved by the Invention]

According to the above technique, a power factor correction circuit can be used on the power transmission side to adjust the voltage of the alternating current supplied to the transmitter coil in the apparatus. Since the power factor correction circuit generally has a step-up function, the voltage output from the power factor correction circuit is higher than the voltage input into the power factor correction circuit. Here, the voltage input into the power factor correction circuit is not constant and can fluctuate due to various factors. If such voltage fluctuations cause the voltage input into the power factor correction circuit to become excessively high, even if the degree of step-up by the power factor correction circuit is adjusted, it is possible that the voltage taken from the receiving coil on the power receiving side is higher than the target value of the voltage supplied to the load circuit. In particular, if the load circuit is designed to operate at a constant voltage, if electric power having a voltage higher than the target value is supplied to the load circuit, this causes a failure which is not preferable.

Further prior art documents are EP 2 066 013 A2, US 2016/134131 A1, US 2014/354074 A1 and JP 2012 090476 A.

Thus, an object of the present invention is to provide a contactless power supply device which can keep an output voltage on the receiving side constant, even if there are variations in the input voltage to the power supply circuit which supplies alternating current to the transmitter coil. This object is achieved by the subject-matter of the claims 1 and 2, which define the invention. Aspects of the invention are set out below.

### [Means to Solve the Problem]

According to one aspect of the present invention, a contactless power supply device is provided that comprises a power transmission device and a power receiving device to which electrical power is transmitted from the power transmission device in a contactless manner. In this contactless power supply device, the power transmission device includes a transmitter coil which supplies electric power to the power receiving device, a power supply circuit which supplies an alternating current obtained by stepping up or stepping down the input voltage to the transmitter coil, a voltage detection circuit which measures the input voltage to the power supply circuit, and a control circuit which controls the degree of stepping up or stepping down, by the power supply circuit, with respect to the input voltage based on the measured input voltage. The power receiving device includes a receiver coil which receives electric power from the power transmission device, a resonance circuit having a resonance capacitor which resonates with the receiver coil in accordance with the electric power from the power transmission device, and a rectifier circuit which rectifies the electric power output from the resonance circuit.

When a contactless power supply device having such a configuration is used, the output voltage on the power receiving side can be kept constant even if there are fluctuations in the input voltage to the power supply circuit which supplies alternating current to the transmitter coil.

In this contactless power supply device, the power supply circuit of the power transmission device includes a power factor correction circuit which steps up the input voltage and outputs direct current, and an inverter which converts the direct current output from the power factor correction circuit into alternating current, wherein the control circuit preferably causes the inverter to operate in a full-bridge mode, if the measured input voltage is less than a predetermined voltage, and causes the inverter to operate in a half-bridge mode, if the measured input voltage is greater than the predetermined voltage.

As a result, with a simple configuration, this contactless power supply device can suitably adjust the degree of the stepping up or stepping down, with respect to the input voltage, of the voltage of the alternating current supplied to the transmitter coil.

Alternatively, in this contactless power supply device, the power supply circuit has a power factor correction circuit which outputs direct current stepped up from the input voltage, a voltage converter which steps up or steps down the voltage of the direct current output from the power factor correction circuit, an inverter which converts the direct current output from the voltage converter into alternating current, and a switchable shorting circuit which short-circuits the voltage converter or not, wherein the control circuit controls the shorting circuit to short-circuit the voltage converter based on the measured input voltage. As a result, this contactless power supply device can suitably adjust the degree of the stepping up or stepping down of the voltage of the alternating current supplied to the transmitter coil with respect to the input voltage.

In this case, the voltage converter steps down the voltage of the direct current output from the power factor correction circuit, and the control circuit preferably controls the shorting circuit to short-circuit the voltage converter, if the measured input voltage is less than the predetermined voltage, and controls the shorting circuit not to short-circuit the voltage converter, if the measured input voltage is greater than the predetermined voltage.

As a result, this contactless power supply device is able keep the output voltage on the power receiving side at its target value, even if the target value of the output voltage on the power receiving side is low and the input voltage fluctuates.

### [Brief explanation of the drawings]

Figure 1 is a schematic diagram of one embodiment of a contactless power supply device according to the present invention.

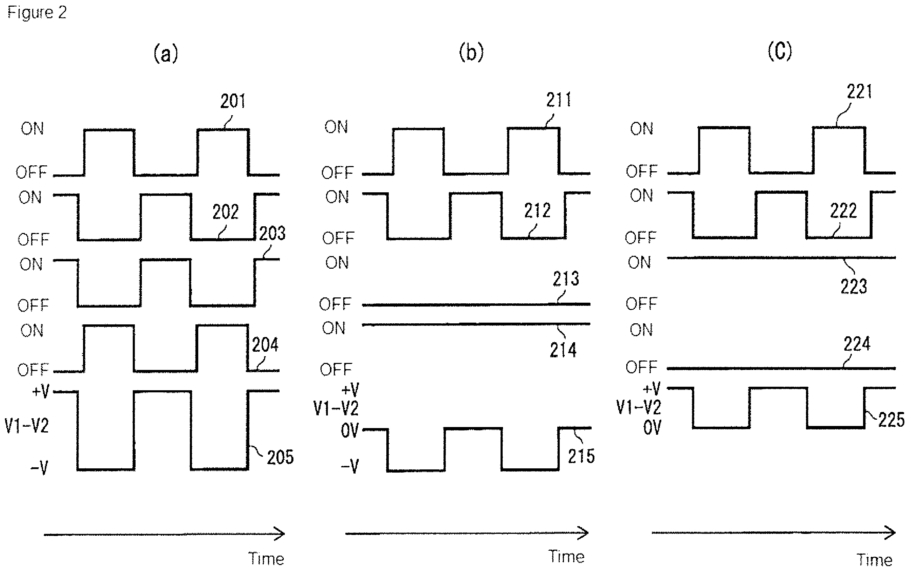

Figure 2 is: (a) a diagram showing an example of the relation between ON/OFF states of each switching element and the voltage between the two terminals of a transmitter coil, when the inverter operates in a full-bridge mode; (b) a diagram showing an example of the relation between ON/OFF states of each switching element and the voltage between the two terminals of the transmitter coil, when the inverter operates in a half-bridge mode; (c) a diagram showing another example of the relation between ON/OFF states of each switching element and the voltage between the two terminals of the transmitter coil, when the inverter operates in a half-bridge mode.
Figure 3 is an equivalent circuit diagram of a contactless power supply device according to the present embodiment.
Figure 4 is a diagram showing an example of simulation results of the frequency characteristics of the output voltage of the contactless power supply device according to the present embodiment.
Figure 5 is a diagram showing an example of simulation results of the frequency characteristics of the output voltage, when the voltage applied to a transmitter coil is varied in accordance with the degree of coupling for the simulation shown in Figure 4.
Figure 6 is a diagram showing the frequency characteristics of a phase delay in the current with respect to the phase of a voltage, when alternating current is applied to the transmitter coil in the contactless power supply device according to the present embodiment.
Figure 7 is a schematic diagram of a power supply circuit according to a variant.
Figure 8 is a circuit diagram of an inverter operating in a half-bridge mode in a power supply circuit according to the variant.
Figure 9 is a schematic diagram of a power supply circuit according to another variant.
Figure 10 is a schematic diagram of a power receiving device according to another variant.
Figure 11 is a diagram showing an example of simulation results of the frequency characteristics of the output voltage, if the voltage applied to the transmitter coil is varied in accordance with the degree of coupling for a contactless power supply device with the power receiving device shown in Figure 10 and the power transmission device shown in Figure 1.

### [Modes for carrying out the invention]

The contactless power supply device according to one embodiment of the present invention is explained below with reference to the figures. On the power transmission side of this contactless power supply device, the inverter of the power supply circuit is switched between a full-bridge mode and a half-bridge mode in accordance with the input voltage to the power supply circuit which supplies alternating current to the transmitter coil. In particular, if the input voltage is greater than a predetermined voltage, the contactless power supply device operates the inverter in a half-bridge mode to decrease the output voltage ratio from the power supply circuit with respect to the input voltage, and if the input voltage is less than the predetermined voltage, the contactless power supply device operates the inverter in a full-bridge mode to increase the output voltage ratio from the power supply circuit with respect to the input voltage. As a result, this contactless power supply device allows to keep an output voltage on the power receiving side constant, even if the input voltage fluctuates, that is, the contactless power supply device can achieve a constant voltage output.

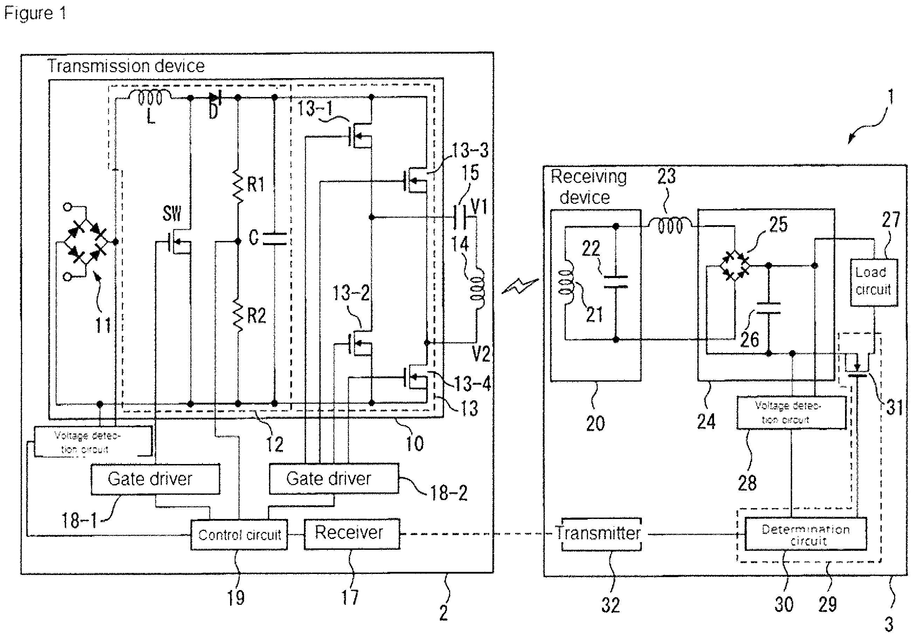

Figure 1 is a schematic diagram of a contactless power supply device according to one embodiment of the present invention. As shown in Fig. 1, the contactless power supply device 1 comprises a power transmission device 2 and a power receiving device 3 to which electrical power is transmitted in a contactless manner from the power transmission device 2. The power transmission device 2 includes a power supply circuit 10, a transmitter coil 14, a capacitor 15, a voltage detection circuit 16, a receiver 17, gate drivers 18-1, 18-2, and a control circuit 19. The power receiving device 3 includes a resonance circuit 20 having a receiver coil 21 and a resonance capacitor 22, a coil 23, a rectifying smoothing circuit 24, a load circuit 27, a voltage detection circuit 28, a constant voltage determination circuit 29, and a transmitter 32. On the power transmission side of the contactless power supply device 1, a transmitter coil and a capacitor are in series resonance, on the power receiving side, a receiver coil and a resonance capacitor are in parallel resonance, and a reactor connected in series with the receiver coil has the same structure as that of the contactless power supply device with the so-called SPL topology which is capable of a constant voltage output. However, the contactless power supply device 1 does not use resonance on the power transmission side. That is, the contactless power supply device 1 improves the electric power transmission efficiency by supplying to the transmitter coil 14 alternating current with a frequency at which the transmitter coil 14 does not resonate.

First, the power transmission device 2 will be explained.

The power supply circuit 10 supplies to the transmitter coil 14 an alternating current with an adjustable switching frequency and an adjustable voltage obtained by stepping up or stepping down an input voltage. For this purpose, the power supply circuit 10 has a power source 11, a power factor correction circuit 12, and an inverter 13. The inverter 13 has four switching elements 13-1 to 13-4.

The power source 11 supplies electric power which has a predetermined undulating voltage. For this purpose, the power source 11 is connected to a commercial AC power source and has a full-wave rectifier circuit for rectifying the alternating current supplied by the AC power source. That is, the voltage from the AC power source input into the power source 11 becomes the input voltage of the power supply circuit 10.

The power factor correction circuit 12 converts the voltage output from the power source 11 into a voltage in accordance with the control of the control circuit 19 and outputs this voltage. For this purpose, the power factor correction circuit 12, for example, has a coil L and a diode D connected in series and successively from the positive terminal of the power source 11 to a drain terminal connected between the coil L and the diode D, to a switching element SW which is an n-channel type MOSFET in which a source terminal is connected to a negative terminal of the electric power supply, and to a smoothing capacitor C which is connected in parallel to the switching element SW across the diode D. A gate terminal of the switching element SW is connected to the gate driver 18-1. Further, the power factor correction circuit 12 has two resistors R1, R2 connected in series between the positive terminal and the negative terminal of the power source 11. These resistors R1 and R2 are connected between the diode D and the smoothing capacitor C in parallel with the smoothing capacitor C. The voltage between the resistor R1 and the resistor R2 is measured by the control circuit 19 to represent the voltage output from the diode D.

The power factor correction circuit 12 performs the power factor correction by the gate driver 18-1 by controlling the ON/OFF switching of the switching element SW in accordance with the duty ratio instructed by the control circuit 19, such that the trace of the current waveform output from the diode D coincides with the trace of the voltage supplied from the power source 11. Thus, the voltage output from the diode D becomes higher as the duty ratio at which the switching element SW is switched ON increases.

The voltage output from the diode D is smoothed by the smoothing capacitor C and is supplied to the transmitter coil 14 via the four switching elements 13-1 to 13-4 forming the inverter 13 and the capacitor 15.

It should be noted that the power factor correction circuit 12 is not limited to the abovementioned configuration and may have another configuration capable of adjusting the output voltage by the control from the control circuit 19.

The four switching elements 13-1 to 13-4 that constitute the inverter 13 may be, for example, n-channel type MOSFETs. Then, among the four switching elements 13-1 to 13-4, the switching elements 13-1 and 13-2 are connected in series between the positive terminal and the negative terminal of the power source 11 via the power factor correction circuit 12. In the present embodiment, moreover, the switching element 13-1 is connected to the positive terminal of the power source 11, and the switching element 13-2 is connected to the negative terminal of the power source 11. Thus, the drain terminal of the switching element 13-1 is connected to the positive terminal of the power source 11 via the power factor correction circuit 12, and the source terminal of the switching element 13-1 is connected to the drain terminal of the switching element 13-2. In addition, the source terminal of the switching element 13-2 is connected to the negative terminal of the power source 11 via the power factor correction circuit 12. Further, the source terminal of the switching element 13-1 and the drain terminal of the switching element 13-2 are connected to one end of the transmitter coil 14, and the source terminal of the switching element 13-2 is connected to the other end of the transmitter coil 14 via the switching element 13-4 and the capacitor 15.

Similarly, among the four switching elements 13-1 to 13-4, the switching element 13-3 and the switching element 13-4 are connected in parallel to the switching elements 13-1 and 13-2 and are connected in series between the positive terminal and the negative terminal of the power source 11 via the power ratio correction circuit 12. Further, the switching element 13-3 is connected to the positive terminal of the power source 11, and the switching element 13-4 is connected to the negative terminal of the power source 11. Thus, the drain terminal of the switching element 13-3 is connected to the positive terminal of the power source 11 via the power factor correction circuit 12, and the source terminal of the switching element 13-3 is connected to the drain terminal of the switching element 13-4. In addition, the source terminal of the switching element 13-4 is connected to the negative terminal of the power source 11 via the power factor correction circuit 12. Further, the source terminal of the switching element 13-3 and the drain terminal of the switching element 13-4 are connected to the other end of the transmitter coil 14 via the capacitor 15.

In addition, the gate terminals of the switching elements 13-1 to 13-4 are connected to the control circuit 19 via the gate driver 18-2. Further, to ensure that these switching elements are switched ON, when the turn-on voltage is applied, the gate terminals of the each switching element 13-1 to 13-4 may respectively be connected to the source terminals of the same elements via the resistors. Each of the switching elements 13-1 to 13-4 is switched ON/OFF at an adjustable switching frequency in accordance with a control signal from the control circuit 19. In the present embodiment, when the inverter 13 operates in the full-bridge mode, the switching elements 13-2 and 13-3 are switched OFF, while the switching elements 13-1 and 13-4 are ON, and conversely the switching elements 13-1 and 13-4 are switched OFF, while the switching elements 13-2 and 13-3 are ON, so that the set of switching elements 13-1 and 13-14 and the set of switching elements 13-2 and 13-3 are alternately switched ON/OFF. As a result, the direct current supplied from the power source 11 via the power factor correction circuit 12 is converted into an alternating current having the switching frequency of the respective switching elements and is supplied to the transmitter coil 14.

Further, when the inverter 13 operates in a half-bridge mode, one of the switching elements 13-3 and 13-4 is always kept ON while the other one is always kept OFF. The switching element 13-2 is switched OFF while the switching element 13-1 is ON, and conversely, the switching element 13-1 is switched OFF while the switching element 13-2 is ON, so that the switching elements 13-1 and 13-2 are alternately switched ON/OFF. As a result, the direct current supplied from the power source 11 via the power factor correction circuit 12 is converted into an alternating current having the switching frequency of the respective switching elements and is supplied to the transmitter coil 14. Further, when the inverter 13 operates in a half-bridge mode, the voltage applied to the transmitter coil 14 is half the voltage applied to the transmitter coil 14 when the inverter 13 operates in a full-bridge mode.

Thus, the transmitter coil 14 transmits the alternating current supplied from the power supply circuit 10 through space to the resonance circuit 20 of the power receiving device 3.

The capacitor 15 is connected in series to the transmitter coil 14. Thus, when the inverter 13 operates in a half-bridge mode, the capacitor 15 suppresses the direct current to the transmitter coil 14, while the inverter 13 supplies alternating current to the transmitter coil 14.

The voltage detection circuit 16 measures the voltage output from the power source 11 and outputs this measured value to the control circuit 19. Further, since the voltage output from the power source 11 corresponds one-to-one with the input voltage from the commercial electric power supply input into the power source 11, the voltage value measured by the voltage detection circuit 16 will indirectly be the measured value of the input voltage supplied to the power source 11. In the present embodiment, since the power source 11 has a full-wave rectifying circuit, the output voltage from the power source 11 will be an undulating voltage. As a result, the voltage detection circuit 16 may be any one of various well-known voltage detection circuits capable of detecting an undulating voltage. In addition, the voltage detection circuit 16 may be provided to directly measure a voltage from a commercial electric power supply which supplies alternating current to the power source 11.

Every time the receiver 17 receives a radio signal from the transmitter 32 of the power receiving device 3, determination information indicating whether the contactless power supply device 1 operates with a constant voltage output is extracted from the radio signal and output to the control circuit 19. For this purpose, the receiver 17 has, for example, an antenna to receive a radio signal according to a predetermined radio communication standard, and a communication circuit to demodulate this radio signal. The predetermined wireless communication standard may be, for example, ISO/IEC 15693, ZigBee (registered trademark), or Bluetooth (registered trademark).

The gate driver 18-1 receives a control signal from the control circuit 19 to switch ON/OFF the switching elements SW of the power factor correction circuit 12 and varies the voltage applied to the gate terminal of the switching element SW in accordance with this control signal. That is, upon receiving a control signal to switch ON a switching element SW, the gate driver 18-1 applies a relatively high voltage to the gate terminal of the switching element SW, at which the switching element SW is switched ON. Otherwise, upon receiving a control signal to switch OFF the switching element SW, the gate driver 18-1 applies a relatively low voltage to the gate terminal of the switching element SW, at which the switching element SW is switched OFF. As a result, the gate driver 18-1 switches the switching element SW of the power factor correction circuit 12 ON/OFF with the timing instructed by the control circuit 19.

The gate driver 18-2 receives from the control circuit 19 a control signal for switching ON/OFF each of the switching elements 13-1 to 13-4, and the voltage applied to the gate terminals of the switching elements 13-1 to 13-4 is varied in accordance with the control signal. That is, when the inverter 13 operates in a full-bridge mode, the gate driver 18-2 receives a control signal to switch ON the switching elements 13-1 and 13-4, a relatively high voltage is applied to the gate terminal of the switching element 13-1 and the gate terminal of the switching element 13-4, so that the switching elements 13-1 and 13-4 are switched ON. As a result, the current from the power source 11 flows through the switching element 13-1, the transmitter coil 14 and the switching element 13-4. Otherwise, upon receiving a control signal to switch OFF the switching elements 13-1 and 13-4, the gate driver 18-2 applies a relatively low voltage to the gate terminal of the switching element 13-1 and the gate terminal of the switching element 13-4 so that the switching elements 13-1 and 13-4 are switched OFF, and electric current does not flow from the power source 11 to the switching elements 13-1 and 13-4. The gate driver 18-2 similarly controls the voltage applied to the gate terminals of the switching elements 13-2 and 13-3. As a result, if the switching elements 13-1 and 13-4 are switched OFF and the switching elements 13-2 and 13-3 are switched ON, electric current from the power source 11 flows through the switching element 13-3, the transmitter coil 14 and the switching element 13-2.

Further, when the inverter 13 operates in the half-bridge mode, the gate driver 18-2 receives a control signal from the control circuit 19 to switch one of the switching elements 13-3 and 13-4 ON and to switch the other one OFF, so that a relatively high voltage is applied to one of the gate terminals to switch ON one of the switching elements 13-3 and 13-4, and a relatively low voltage is applied to the gate terminal of the other switching element to switch that other switching element OFF. Further, the gate driver 18-2 applies a relatively high voltage to the respective gate terminals of the switching elements 13-1 and 13-2 that switches them alternately ON. As a result, the electric current from the power source 11 flows either through the switching elements 13-3 and 13-4 or the transmitter coil 14 and the switching elements 13-1 and 13-2.

The control circuit 19 has, for example, a nonvolatile memory circuit and a volatile memory circuit, an arithmetic circuit, and an interface circuit for connecting with other circuits. Thus, the control circuit 19 switches the inverter 13 of the power supply circuit 10 either to operate in a full-bridge mode or in a half-bridge mode based on to the value of the output voltage from the power source 11 measured by the voltage detection circuit 16. Further, every time the control circuit 19 receives the determination information from the receiver 17, the control circuit 19 controls the switching frequency and the voltage of the alternating current supplied from the power supply circuit 10 to the transmitter coil 14 in accordance with this determination information.

In the present embodiment, the control circuit 19 compares the measured value of the output voltage from the power source 11 received from the voltage detection circuit 16 with a predetermined voltage. If the measured value is less than the predetermined voltage, the control circuit 19 outputs a control signal to the gate driver 18-2 to cause the inverter 13 to operate in a full-bridge mode. Otherwise, if the measured value of the output voltage is greater than the predetermined voltage, the control circuit 19 outputs a control signal to the gate driver 18-2 to cause the inverter 13 to operate in a half-bridge mode. As a result, when the inverter 13 operates in a full-bridge mode, the control circuit 19 may adjust the voltage output from the resonance circuit 20 to its target value, even if the input voltage to the power supply circuit 10 is too high with respect to the target value for the voltage output from the resonance circuit 20 of the power receiving device 3. Further, when the inverter 13 operates in a half-bridge mode, the voltage supplied from the power supply circuit 10 to the transmitter coil 14 can be stepped down with respect to the input voltage to the power supply circuit 10.

For example, the predetermined voltage is set to the minimum value of the output voltage from the power source 11, when the degree of coupling between the transmitter coil 14 and the receiver coil 21 reaches the assumed maximum value, and when, with the inverter 13 operating in the full-bridge mode, the degree of stepping up by the power factor correction circuit 1 is set to an adjustable minimum limit and the contactless power supply device 1 can operate with a constant voltage output.

When the inverter 13 is caused to operate in the full-bridge mode, the control circuit 19 alternately switches ON the set of switching elements 13-1 and 13-4 and the set of switching elements 13-2 and 13-3, and the respective switching elements 13-1 to 13-4 are controlled via the gate driver 18-2, so that the period in which the set of switching elements 13-1 and 13-4 is ON and the period in which the set of switching elements 13-2 and 13-3 is ON are equal within one time period that depends on the switching frequency. To prevent the set of switching elements 13-1 and 13-4 and the set of switching elements 13-2 and 13-3 from being simultaneously switched ON and short-circuiting the power source 11, a dead time may be provided in which both sets of switching elements are switched OFF during the ON/OFF switching of the set of switching elements 13-1 and 13-4 and the set of switching elements 13-2 and 13-3.

Otherwise, when the inverter 13 is caused to operate in the half-bridge mode, the control circuit 19 controls the switching elements 13-3 and 13-4 via the gate driver 18-2, such that one of the switching elements 13-3 and 13-4 is switched ON and the other one is switched OFF. Further, the control circuit 19 controls the switching elements 13-1 and 13-2 via the gate driver 18-2, such that the switching element 13-1 and the switching element 13-2 are alternately switched ON and the period during which the element 13-1 is ON and the period during which the element 13-2 is ON are equal within one time period that depends on the switching frequency. To prevent the switching elements 13-1 and 13-2 from switching ON at the same time and short circuiting the power source 11, a dead time may be provided during which both switching elements are switched OFF, when the control circuit 19 switches the switching elements 13-1 and 13-2 ON/OFF.

Figure 2(a) is a diagram that shows an example of the relation between the ON/OFF states of each of the switching elements 13-1 to 13-4 and the voltage between the two terminals of the transmitter coil 14, when the inverter 13 operates in a full-bridge mode. In Fig. 2(a), the horizontal axis represents the time. Further, from top to bottom in Fig. 2(a), the waveform 201 shows the change over time in the ON/OFF states of the switching element 13-1, the waveform 202 shows the change over time in the ON/OFF states of the switching element 13-2, the waveform 203 shows the change over time in the ON/OFF states of the switching element 13-3, and the waveform 204 shows the change over time in the ON/OFF states of the switching element 13-4. Thus, a waveform 205 represents a change over time in the voltage between the two terminals of the transmitter coil 14. Further, V stands for the voltage output from the power factor correction circuit 12.

As shown by the waveforms 201 to 205, when the switching element 13-1 and the switching element 13-4 are switched ON and the switching element 13-2 and the switching element 13-3 are switched OFF, the potential V1 of the terminal on the side of the capacitor 15 of the transmitter coil 14 becomes 0, and the potential V2 of the terminal on the side opposite the capacitor 15 of the transmitter coil 14 becomes V. As a result, the voltage (V1 - V2) between the two terminals of the transmitter coil 14 is (-V). Otherwise, when the switching element 13-1 and the switching element 13-4 are switched OFF and the switching element 13-2 and the switching element 13-3 are switched ON, the potential V1 becomes V and the potential V2 becomes 0. As a result, the voltage (V1 - V2) between the two terminals of the transmitter coil 14 is (+V). Therefore, when the inverter 13 operates in a full-bridge mode, AC voltage (2 V) is supplied to the transmitter coil 14.

Figure 2(b) is a diagram showing an example of the relation between the ON/OFF states of each switching element 13-1 to 13-4 and the voltage between the two terminals of the transmitter coil 14, when the inverter 13 operates in a half-bridge mode. In this example, while the inverter 13 continues to operate in the half-bridge mode, the switching element 13-3 remains OFF and the switching element 13-4 remains ON. In Fig. 2(b), the horizontal axis represents the time. Further, in Fig. 2(b), from top to bottom, the waveform 211 shows the change over time in the ON/OFF states of the switching element 13-1, the waveform 212 shows the change over time in the ON/OFF states of the switching element 13-2, the waveform 213 shows the change over time in the ON/OFF state of the switching element 13-3, and the waveform 214 shows the change over time in the ON/OFF states of the switching element 13-4. Thus, the waveform 215 represents a change over time in the voltage between the two terminals of the transmitter coil 14. Further, V is the voltage output from the power factor correction circuit 12.

As shown by waveforms 211 to 215, when the switching element 13-1 is switched ON and the switching element 13-2 is switched OFF, the potential V1 of the terminal on the side of the capacitor 15 of the transmitter coil 14 becomes 0, and the potential V2 of the terminal on the side opposite the capacitor 15 of the transmitter coil 14 becomes V. As a result, the voltage (V1 - V2) between the two terminals of the transmitter coil 14 is (-V). Otherwise, when the switching element 13-1 is switched OFF and the switching element 13-2 is switched ON, and the potentials V1 and V2 both become 0. Therefore, the voltage (V1 - V2) between the two terminals of the transmitter coil 14 becomes 0. Therefore, when the inverter 13 operates in the half-bridge mode, an AC voltage V is supplied to the transmitter coil 14.

Fig. 2(c) is a diagram showing another example of the relation between the ON/OFF states of each switching element 13-1 to 13-4 and the voltage between the two terminals of the transmitter coil 14, when the inverter 13 operates in a half-bridge mode. In this example, while the inverter 13 continues to operate in the half-bridge mode, the switching element 13-3 remains ON and the switching element 13-4 remains OFF. In Fig. 2(c), the horizontal axis represents the time. Further, in Fig. 2(c), from top to bottom, the waveform 221 shows the change over time in the ON/OFF states of the switching element 13-1, the waveform 222 shows the change over time in the ON/OFF states of the switching element 13-2, the waveform 223 represents a change over time in the ON/OFF states of the switching element 13-3, and the waveform 224 represents a change over time in the ON/OFF states of the switching element 13-4. Thus, the waveform 225 represents a change over time in the voltage between the two terminals of the transmitter coil 14. Further, V is the voltage output from the power factor correction circuit 12.

As shown by the waveforms 221 to 225, when the switching element 13-1 is switched ON and the switching element 13-2 is switched OFF, the potential V1 of the terminal on the side of the capacitor 15 of the transmitter coil 14 and the potential V2 of the terminal on the side opposite the capacitor 15 of the transmitter coil 14 both become V. As a result, the voltage (V1 - V2) between the two terminals of the transmitter coil 14 becomes 0. Otherwise, when the switching element 13-1 is switched OFF and the switching element 13-2 is switched ON, the potential V1 becomes V and the potential V2 becomes 0. As a result, the voltage (V1 - V2) between the two terminals of the transmitter coil 14 becomes V. Thus, when the inverter 13 operates in a half-bridge mode, an AC voltage V is supplied to the transmitter coil 14.

Thus, the control circuit 19 can vary the AC voltage supplied to the transmitter coil 14 by switching the inverter 13 between the full-bridge mode and the half-bridge mode.

Further, when the inverter 13 operates in the full-bridge mode and the output voltage from the power source 11 and the switching frequency give a constant voltage output, the control circuit 19 looks up a reference table for the full-bridge mode which represents the duty ratios for controlling the ON/OFF switching of the switching elements SW of the power factor correction circuit 12 which correspond to the voltage applied to the transmitter coil 14 and selects a duty ratio in accordance with the output voltage from the power source 11 and the switching frequency. The control circuit 19 determines the timing of the ON/OFF switching of the switching elements SW in accordance with this duty ratio and the variation in the output voltage from the diode D of the power factor correction circuit 12, and outputs a control signal that indicates this timing to the gate driver 18-1.

Similarly, when the inverter 13 operates in a half-bridge mode and the output voltage from the power source 11 and the switching frequency give a constant voltage output, the control circuit 19 looks up a reference table for the half-bridge mode which represents the duty ratios for controlling the ON/OFF switching of the switching elements SW of the power factor correction circuit 12 which correspond to the voltage applied to the transmitter coil 14 which correspond to the voltage applied to the transmitter coil 14 and selects a duty ratio in accordance with to the output voltage from the power source 11 and the switching frequency. Then, the control circuit 19 determines the timing of the ON/OFF switching of the switching elements SW in accordance with this duty ratio and the variation in the output voltage from the diode D of the power factor correction circuit 12 and outputs a control signal that indicates this timing to the gate driver 18-1.

Further, if the power receiving device 3 is not in at a location where electric power can be supplied from the power transmission device 2, the receiver 17 cannot receive a radio signal from the power receiving device 3, that is, the power transmission device 2 is assumed to be in a standby state. In this case, the control circuit 19 may set the duty ratio for ON/OFF control of the switching elements SW to the minimum setting value. Alternatively, the control circuit 19 may operate the power supply circuit 10 with the duty ratio for ON/OFF control of the switching elements SW set to a preset value for a relatively short predetermined period (for example, about several seconds), and thereafter may repeatedly control to interrupt the electric power supply from the power supply circuit 10 to the receiver coil 14 by maintaining each switching element OFF, controlling the power supply circuit 10 in a so-called "burst mode". As a result, while the power transmission device 2 is in the standby state, the voltage applied to the transmitter coil 14 also has the minimum setting value, so that energy loss is suppressed.

The details of the control of the switching frequency and the voltage applied to the transmitter coil 14 by the control circuit 19 will be described later.

Next, the power receiving device 3 will be explained.

The resonance circuit 20 is an LC resonance circuit including a receiver coil 21 and a resonance capacitor 22 that are connected in parallel. Thus, one end of the receiver coil 21 of the resonance circuit 20 is connected to one end of the resonance capacitor 22 and is also connected to one input terminal of the rectifying smoothing circuit 24 via the coil 23. In addition, the other end of the receiver coil 21 is connected to the other end of the resonance capacitor 22 and is also connected to the other input terminal of the rectifying smoothing circuit 24.

The receiver coil 21 resonates with the alternating current flowing in the transmitter coil 1 4 of the power transmission device 2, and thereby receives power from the transmitter coil 14. Then, the receiver coil 21 outputs the received power via the resonance capacitor 22 and the coil 23 to the rectifying smoothing circuit 24. Further, the number of windings of the receiver coil 21 and the number of windings of the transmitter coil 14 of the power transmission device 2 may be the same or different.

One end of the resonance capacitor 22 is connected to one end of the receiver coil 21 and to the coil 23, and the other end thereof is connected to the other end of the receiver coil 21 and to the rectifying smoothing circuit 24. Then, the resonance capacitor 22 outputs the power received by the receiver coil 21 to the rectifying smoothing circuit 24 via the coil 23.

The coil 23 is connected between the resonance circuit 20 and the rectifying and smoothing circuit 24. In the present embodiment, the coil 23 is connected to be in series with the receiver coil 21, being connected at one end thereof with the receiver coil 21 of the resonance circuit 20 and the resonance capacitor 22 and connected at the other end with the rectifying smoothing circuit 24. Thus, the coil 23 outputs the electric power from the resonance circuit 20 to the rectifying smoothing circuit 24. Further, by providing the coil 23, harmonic components of the received power are suppressed similarly to the SPL topology.

The rectifying and smoothing circuit 24 is an example of a rectifying circuit which has a full-wave rectifying circuit 25 with four bridge-connected diodes and a smoothing capacitor 26, wherein electric power is received by the resonance circuit 20, and the power received via the coil 23 is rectified and is smoothed and converted into direct current. Then, the rectifying and smoothing circuit 24 outputs this direct current to the load circuit 27.

The voltage detection circuit 28 measures the output voltage between the two terminals of the rectifying smoothing circuit 24 in predetermined time intervals. Since the output voltage between the two terminals of the rectifying and smoothing circuit 24 corresponds one-to-one to the output voltage from the resonance circuit 20, the measured value of the output voltage between the two terminals of the rectifying and smoothing circuit 24 is indirectly the measured value of the output voltage from the resonance circuit 20. The voltage detection circuit 28 may for example be any one of various well-known voltage detection circuits capable of detecting a DC voltage. The voltage detection circuit 28 outputs a voltage detection signal representing the measured value of the output voltage to the constant voltage determination circuit 29.

Based on the measured value of the output voltage received from the voltage detection circuit 28, the constant voltage determination circuit 29 determines whether the contactless power supply device 1 operates with a constant voltage output, and whether the measured value of the output voltage is within the tolerance range, if a constant voltage output is being performed. Then, the constant voltage determination circuit 29 sends the determination result to the transmitter 32. For this purpose, the constant voltage determination circuit 29 has a determination circuit 30 that has, for example, a memory circuit for storing a tolerance range of the voltage, and an arithmetic circuit for comparing the measured value of the output voltage with the tolerance range of the voltage.

Further, the constant voltage determination circuit 29 has a switching element 31 which is a MOSFET connected between the rectifying smoothing circuit 24 and the load circuit 27. When the switching element 31 is switched OFF, the current does not flow from the rectifying smoothing circuit 24 to the load circuit 27 (that is, Rac = ∞), and when the switching element 31 is switched ON, a current flows from the rectifying smoothing circuit 24 to the load circuit 27. Thus, the determination circuit 30 of the constant voltage determination circuit 29 switches the switching element 31 ON/OFF for a predetermined period while the measured value of the output voltage is outside the tolerance voltage range. As a result, the resistance value of the entire circuit, including the load circuit 27 connected to the rectifying and smoothing circuit 24, varies for the predetermined period. As a result, the determination circuit 30 determines whether the contactless power supply device 1 operates with a constant voltage output by determining whether the measured value of the output voltage becomes substantially constant while the switching element 31 is switched ON/OFF. Thus, when the switching element 31 is switched ON/OFF for a predetermined period, while the measured value of the output voltage is substantially constant, the determination circuit 30 reports to the transmitter 32 that the contactless power supply device 1 operates with a constant voltage output.

In addition, if the contactless power supply device 1 operates with a constant voltage output at the measured value of the output voltage during a fixed period that is longer than the predetermined period, the determination circuit 30 stops the ON/OFF switching of the switching element 31 and maintains the ON state. Then, the determination circuit 30 determines whether the measured value of the output voltage is within the tolerance voltage range, and reports this determination result to the transmitter 32.

Here, if the measured value of the output voltage is within the tolerance voltage range during a fixed period that is longer than the predetermined period, the determination circuit 30 determines that the contactless power supply device 1 operates with a constant voltage output and reports the determination result indicating that the measured value of the output voltage is within the tolerance voltage range to the transmitter 32.

Further, according to a variant, in contrast to the rectifying smoothing circuit 24, the constant voltage determination circuit 29 may have a resistor connected in parallel with the load circuit 27. In this case, the switching element 31 may be provided in series with the resistor and in parallel with the load circuit 27. In this case, the determination circuit 30 switches the switching element 31 OFF, if the measurement value of the output voltage is within the tolerance voltage range. Otherwise, if the measured value of the output voltage is outside the tolerance voltage range, as in the above embodiment, the determination circuit 30 may switch the switching element 31 ON/OFF for a predetermined period. According to this variant, the electric power supply to the load circuit 27 is continued, even if the contactless power supply device 1 is not operating with a constant voltage output.

According to still another variant, a second switching element such as a MOSFET may be provided in parallel with the abovementioned resistor and in series with the load circuit 27. In this case, if the measured value of the output voltage is within the tolerance voltage range, the determination circuit 30 switches the second switching element ON to enable electric power supply to the load circuit 27. Otherwise, if the measured value of the output voltage is outside the tolerance voltage range, the determination circuit 30 may switch the second switching element OFF to interrupt the electric power supply to the load circuit 27. As a result, even if the voltage of the received power becomes excessively high while the switching frequency in the power transmission device 2 is being adjusted, the excessively high voltage is prevented from being applied to the load circuit 27.

In accordance with the determination result received from the determination circuit 30 of the constant voltage determination circuit 29, the transmitter 32 generates a radio signal that includes determination information that indicates whether the contactless power supply device 1 operates with a constant voltage output and whether the output voltage is within the tolerance voltage range, and transmits this radio signal to the receiver 17 of the power transmission device 2. For this purpose, the transmitter 32 has, for example, a communication circuit which generates a radio signal according to a predetermined wireless communication standard, and an antenna that outputs the radio signal. Further, the predetermined wireless communication standard may be the same as for receiver 17, for example, ISO/IEC 15693, ZigBee (registered trademark), or Bluetooth (registered trademark).

The details of the operation of the contactless power supply device 1 will be described below.

In the present embodiment, based on the determination information received from the receiver 17, the control circuit 19 of the power transmission device 2 controls the switching frequency and the voltage of the alternating current supplied from the power supply circuit 10 to the transmitter coil 14.

The contactless power supply device 1 according to the present embodiment does not use resonance on the power transmission side and has the same configuration as the SPL topology. Therefore, the frequency characteristics of the output voltage from the contactless power supply device 1, when the electrostatic capacitance of the capacitor connected in series with the transmitter coil is increased and the resonance frequency of the resonance circuit on the power transmission side is lowered, are similar to the output voltage frequency characteristics in an contactless power supply device of the SPL topology.

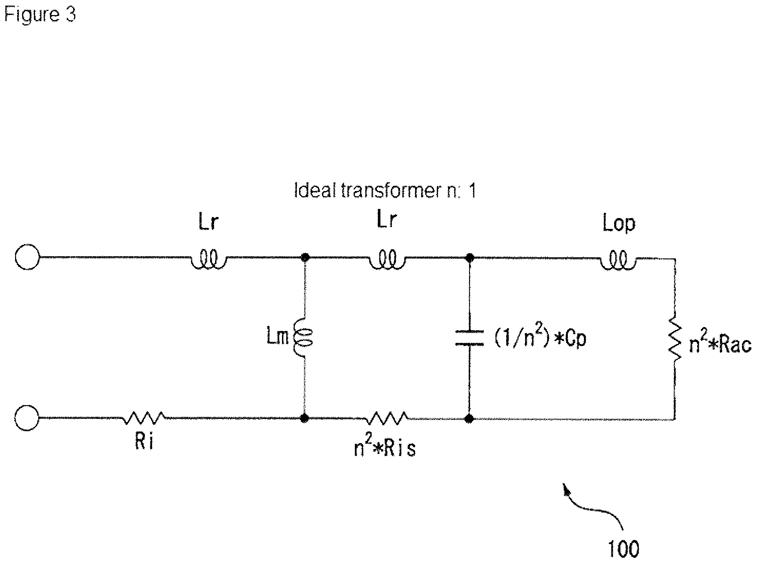

Figure 3 is an equivalent circuit diagram of the contactless power supply device 1. In this equivalent circuit 100, the transmitter coil 14 on the power transmission side and the receiver coil 21 of the resonance circuit 20 on the power receiving side are coupled to form an n:1 ideal transformer. Lr and Lm are the leakage inductance and the excitation inductance of the transmitter coil 14 on the power transmission side. When the inductance Lp of the transmitter coil 14 on the power transmission side is equal to (Lm + Lr), and k is the degree of coupling between the transmitter coil 14 and the receiver coil 21, Lr = (1-k)Lp, Lm = kLp. Further, Ri is the winding resistance value on the power transmission side, and Ris is the winding resistance value on the power receiving side. Cp is the electrostatic capacitance of the resonance capacitor 22 connected in parallel to the receiver coil 21 in the resonance circuit 20 on the power reception side. Lop is the inductance of the coil 23 connected in series with the receiver coil 21. Rac is the equivalent AC resistance value of the load circuit 27 and is represented by Rac = (8/π²) × Ro using the resistance value Ro of the load circuit 27.

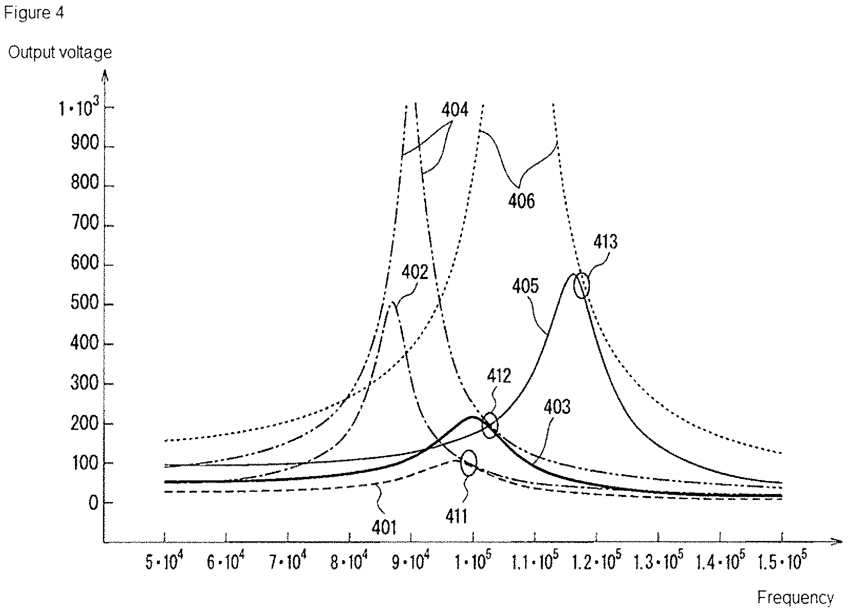

Fig. 4 is a diagram showing an example of simulation results for the output voltage frequency characteristics of the contactless power supply device 1 according to the present embodiment. In Fig. 4, the horizontal axis represents the frequency and the vertical axis represents the output voltage. Further, in this simulation, Lp = 174 µH, Cp = 20 nF, Lop = 3 Lp, Ri = Ris = 0.3 Ω, n = 1, and the voltage Vin of the alternating current supplied to the transmitter coil 14 = 200 V, Ro = 200 Ω (Rac ≈ 162.1 Ω). The graph 401 represents the output voltage frequency characteristics, when the degree of coupling k = 0.15 and the equivalent AC resistance value of the load circuit 27 is Rac. The graph 402 represents the output voltage frequency characteristics, when the degree of coupling k = 0.15 and the equivalent AC resistance value of the load circuit 27 is (10 ^{∗} Rac). In addition, the graph 403 represents the output voltage frequency characteristics, when the degree of coupling k = 0.3 and the equivalent AC resistance value of the load circuit 27 is Rac. The graph 404 represents the output voltage frequency characteristics, when the degree of coupling k = 0.3 and the equivalent AC resistance value of the load circuit 27 is (10 ^{∗} Rac). The graph 405 represents the output voltage frequency characteristics, when the degree of coupling k = 0.6 and the equivalent AC resistance value of the load circuit 27 is Rac. Further, the graph 406 represents the output voltage frequency characteristics, when the degree of coupling k = 0.6 and the equivalent AC resistance value of the load circuit 27 is (10 ^{∗} Rac).

As shown in Fig. 4, under the condition that the degree of coupling k does not vary, even if the equivalent AC resistance value of the load circuit 27 varies, the output voltage becomes substantially constant (that is, it becomes a constant voltage output), and for each degree of coupling, there are combinations of frequency and output voltage (such as the three points 411 to 413 in the figure). As a result, even if the alternating current applied to the transmitter coil 14 has a switching frequency at which the transmitter coil 14 does not resonate, it is possible to cause the contactless power supply device 1 to perform a constant voltage output operation with respect to variation in the resistance value of the load circuit 27. Further, as indicated by the points 411 to 413, when the voltage outputs become constant voltage outputs with respect to a variation of the resistance value of the load circuit 27 that differ from one another in accordance with the degree of coupling, these differences in the output voltage can be substantially constant regardless of the degree of coupling by adjusting the voltage applied to the coil 14.

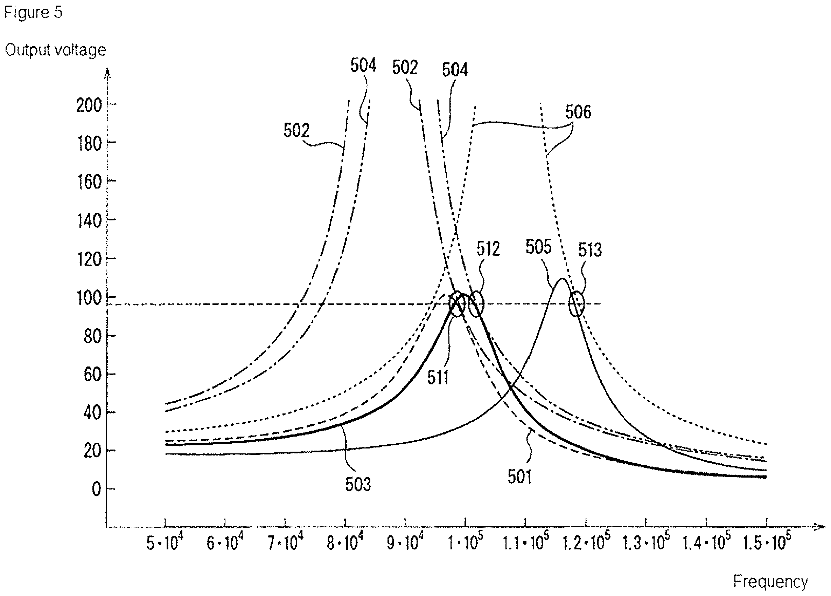

In the simulation shown in Fig. 4, Fig. 5 is a diagram showing an example of simulation results of the output voltage frequency characteristics, when the voltage applied to the transmitter coil 14 is varied in accordance with the degree of coupling. In Fig. 5, the horizontal axis represents the frequency and the vertical axis represents the output voltage. The graph 501 represents the output voltage frequency characteristics, when the degree of coupling k = 0.15, the equivalent AC resistance value of the load circuit 27 is Rac, and the voltage applied to the transmitter coil 14 is Vin. Further, the graph 502 represents the output voltage frequency characteristics, when the degree of coupling k = 0.15, the equivalent AC resistance value of the load circuit 27 is (10 ^{∗} Rac), and the voltage applied to the transmitter coil 14 is Vin. Further, the graph 503 represents the output voltage frequency characteristics, when the degree of coupling k = 0.3, the equivalent AC resistance value of the load circuit 27 is Rac, and the voltage applied to the transmitter coil is (0.47 ^{∗} Vin). The graph 504 represents the output voltage frequency characteristics, when the degree of coupling k = 0.3, the equivalent AC resistance value of the load circuit 27 is (10 ^{∗} Rac), and the voltage applied to the transmitter coil is (0.47 ^{∗} Vin). Further, the graph 505 represents the output voltage frequency characteristics, when the degree of coupling k = 0.6, the equivalent AC resistance value of the load circuit 27 is Rac, and the voltage applied to the transmitter coil is (0.19 ^{∗} Vin). The graph 506 represents the output voltage frequency characteristics, when the degree of coupling k = 0.6, the equivalent AC resistance value of the load circuit 27 is (10 ^{∗} Rac), and the voltage applied to the transmitter coil is (0.19 ^{∗} Vin).

Corresponding to the points 411 to 413 shown in Fig. 4, and under the condition that the degree of coupling k does not vary, even if the equivalent AC resistance value of the load circuit 27 varies, the output voltage becomes substantially constant (that is, a constant voltage output), and there are combinations of frequency and the output voltage at three points such as 511 to 513. The respective output voltages of the points 511 to 513 are substantially equal.

As described above, even if either the resistance value or the degree of coupling of the load circuit 27 fluctuates, the output voltage is kept substantially constant by appropriately adjusting the switching frequency and the voltage of the alternating current applied to the transmitter coil 14.

Thus, to achieve a constant voltage output operation, the control circuit 19 controls the switching frequency and the voltage of the alternating current applied to the transmitter coil 14 as described below.

If the determination information in the radio signal received from the power receiving device 3 via the receiver 17 indicates that the contactless power supply device 1 is not performing a constant voltage output operation, the control circuit 19 causes the switching frequency of the alternating current to vary within a predetermined frequency range. The predetermined frequency range when power is supplied from the power transmission device 2 to the power receiving device 3, may for example be a frequency range having a lower frequency limit of the constant voltage output at the assumed minimum degree of coupling between the transmitter coil 14 and the receiver coil 21, and an upper frequency limit of the constant voltage output at the assumed maximum degree of coupling between the transmitter coil 14 and the receiver coil 21.

When varying the switching frequency, the control circuit 19 may increase the switching frequency from the lower limit towards the upper limit of the predetermined frequency range, or conversely, the control circuit 19 may decrease the switching frequency from the upper limit towards the lower limit of the predetermined frequency range. Here, it is preferable for the control circuit 19 to vary the switching frequency in a stepped manner to maintain the same switching frequency for a time period that is longer than the ON/OFF switching period, so that the constant voltage determination circuit 29 of the power receiving device 3 can check whether the output voltage becomes substantially constant.

It is preferable that the control circuit 19 reduces the voltage applied to the transmitter coil 14 towards the lower voltage limit while adjusting the switching frequency. As a result, the power supplied to the power receiving device 3 will be suppressed, if its voltage becomes excessively high.

If the determination information in the radio signal received from the power receiving device 3 via the receiver 17 indicates, that, although the measured value of the output voltage in is not within the tolerance voltage range, it becomes substantially constant, even if the resistance of the load circuit varies, that is, that a constant voltage output is being performed, the control circuit 19 thereafter keeps the switching frequency constant. Then, if the output voltage from the power source 11 and the switching frequency give a constant voltage output regardless of the degree of coupling at this switching frequency, the control circuit 19 looks up the reference table which represents the duty ratios for controlling the ON/OFF switching of the switching elements SW of the power factor correction circuit 12 and determines this duty ratio. Here, if the output voltage from the power source 11 is less than the predetermined voltage and the inverter 13 is operated in a full-bridge mode, the control circuit 19 looks up a reference table for the full-bridge mode to determine the duty ratio. Otherwise, if the output voltage from the power source 11 is greater than the predetermined voltage and the inverter 13 is operated in a half-bridge mode, the control circuit 19 looks up a reference table for the half-bridge mode to determine the duty ratio.

Then, the control circuit 19 controls the gate driver 18-1 in the ON/OFF switching of the switching elements SW of the power factor correction circuit 12 in accordance with the duty ratio. As a result, the voltage applied to the transmitter coil 14 is adjusted such that the output voltage from the resonance circuit 20 is within the tolerance voltage range, that is, a constant voltage is output regardless of the degree of coupling. If the determination information in the radio signal received from the power receiving device 3 via the receiver 17 indicates that the measurement value of the output voltage is within the tolerance voltage range, and the control circuit 19 keeps the switching frequency and the voltage of the alternating current supplied to the transmitter coil 14 constant.

Instead of determining the duty ratio with reference to the abovementioned reference table, the control circuit 19 may also vary the duty ratio gradually until the determination information in the radio signal received from the power receiving device 3 via the receiver 17 indicates that the measurement value of the output voltage is within the tolerance voltage range.

Further, to improve the energy transmission efficiency, it is preferable that the power supply circuit 10 and the transmitter coil 14 of the power transmission device 2 continuously perform a soft switching (inductive) operation. For the soft switching operation of the power supply circuit 10 and the transmitter coil 14, it is preferable that the phase of the current flowing through the transmitter coil 14 is delayed from the phase of the voltage to be applied. As a result, for example, if the switching element 13-1 and the switching element 13-4 are switched ON, a current is flowing from the source terminal to the drain terminal of the switching element 13-1, so that the power supply circuit 10 and the transmitter coil 14 perform a soft switching operation, and the occurrence of switching loss is suppressed.

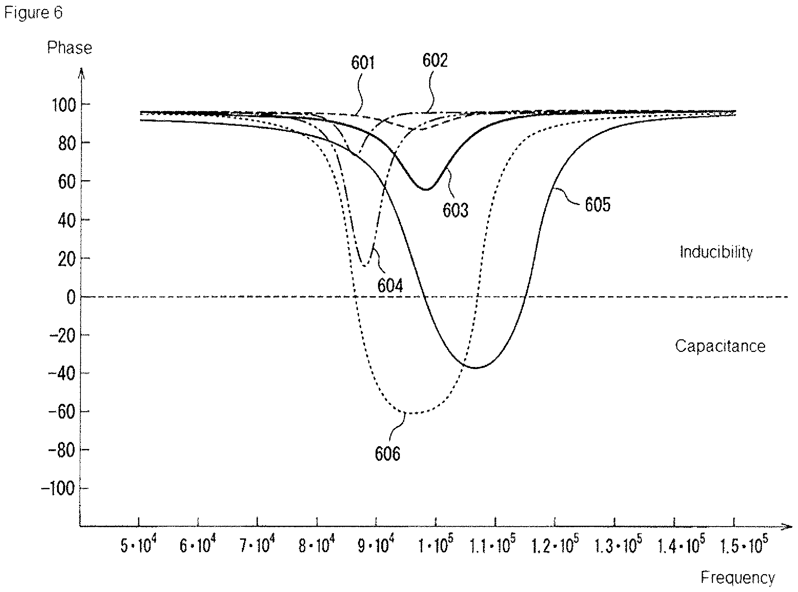

Fig. 6 is a diagram showing the frequency characteristics of the phase delay in the current with respect to the phase of the voltage in the alternating current applied to the transmitter coil 14 in the contactless power supply device 1 according to the present embodiment. In Fig. 6, the horizontal axis represents the frequency and the vertical axis represents the phase. Further, in this figure, when the phase has a positive value, this indicates that the phase of the current is delayed from the phase of the voltage. The graph 601 represents the frequency characteristics of the delay in the phase, if the degree of coupling k = 0.15 and the equivalent AC resistance value of the load circuit is Rac. Further, the graph 602 represents the frequency characteristics, when the degree of coupling k = 0.15 and the equivalent AC resistance value of the load circuit is (10 ^{∗} Rac). In addition, the graph 603 represents the frequency characteristics, when the degree of coupling k = 0.3 and the equivalent AC resistance value of the load circuit is Rac. Further, the graph 604 represents the frequency characteristics, when the degree of coupling k = 0.3 and the equivalent AC resistance value of the load circuit is (10 ^{∗} Rac). Further, the graph 605 represents the frequency characteristics of the delay in the phase, if the degree of coupling k = 0.6 and the equivalent AC resistance value of the load circuit is Rac. Further, the graph 606 represents the frequency characteristics, when the degree of coupling k = 0.6 and the equivalent AC resistance value of the load circuit is (10 ^{∗} Rac).

As shown in the graphs 601 to 606, in the frequency region that includes the frequencies corresponding to the points 511 to 513 shown in Fig. 5, that is, in the frequency region in which the contactless power supply device 1 performs a constant voltage output operation, for the combinations of degree of coupling and frequency with constant voltage output the phase delay has a positive value. Thus, the contactless power supply device 1 according to the present embodiment can perform a soft switching operation on the power supply circuit 10 and the transmitter coil 14.

As described above for this contact less power supply device, the power supply circuit switches the inverter between a full-bridge mode and a half-bridge mode based on the input voltage to the power supply circuit which supplies alternating current to the transmitter coil of the power transmission device. As a result, this contactless power supply device can increase the tolerance range of fluctuation in the input voltage to the power supply circuit which can perform a constant voltage output operation. Therefore, even if there are fluctuations in the input voltage to the power supply circuit which supplies alternating current to the transmitter coil, this contactless power supply can keep an input voltage on the electric power receiving side constant. Further, since this contactless power supply device can increase the tolerance range of fluctuation in the input voltage to the power supply circuit, various commercial electric power supplies having different rated voltages may be used for input into the power supply circuit. Further, the circuit configuration in this contactless power supply device can be simplified by using an inverter that can operate in a full-bridge mode or in a half-bridge mode.

Further, according to a modified example, the power supply circuit of the power transmission device has an inverter that operates in the full-bridge mode and an inverter that operates in the half-bridge mode that are provided separately.

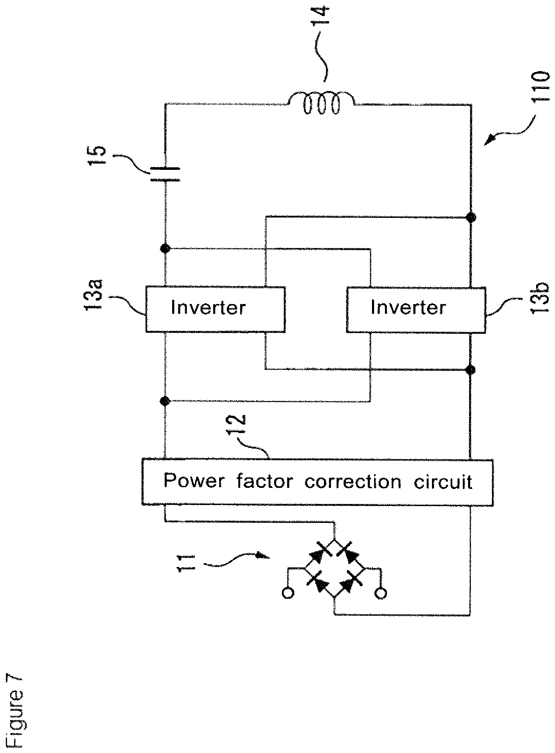

Figure 7 is a schematic diagram of a power supply circuit according to this variant. In this variant, the power supply circuit 110 has a power source 11, a power factor correction circuit 12, an inverter 13a, and an inverter 13b. According to this variant, the power supply circuit 110 is different in that compared to the power supply circuit 10 of the above embodiment, it has two types of inverter. This difference and related points will be explained below.

In this variant, the inverter 13a and the inverter 13b are connected in parallel between the power factor correction circuit 12 and the transmitter coil 14. Both the inverter 13a and the inverter 13b are controlled by the control circuit 19 via the gate driver 18-2. Further, the inverter 13a is an inverter capable of operates in a full-bridge mode, and, for example, may have the same configuration as the inverter 13 in the above embodiment. On the other hand, the inverter 13b is an inverter capable of operating in a half-bridge mode.

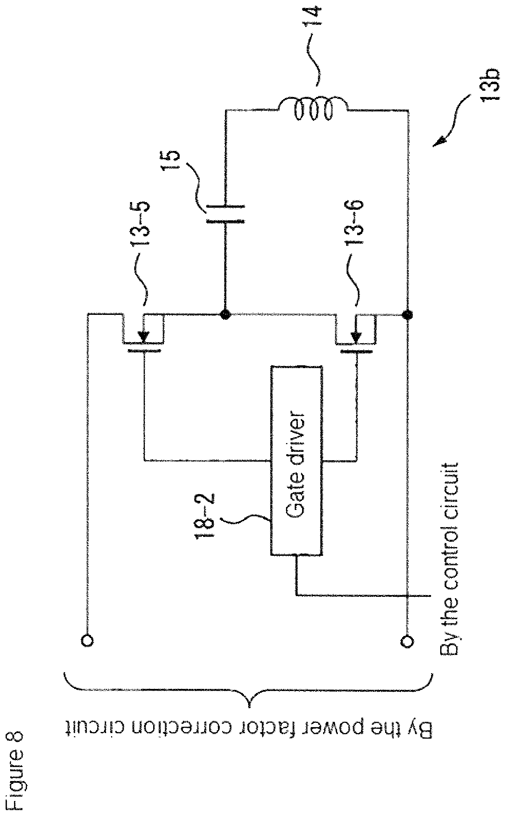

Fig. 8 is a circuit diagram of the inverter 13b. In this example, the inverter 13b has two switching elements 13-5 and 13-6 connected in series between the positive terminal and the negative terminal of the power source 11. Each switching element may, for example, be an n-channel type MOSFET. The switching element 13-5 is connected to the positive terminal of the power source 11, while on the other hand, the switching element 13-6 is connected to the negative terminal of the power source 11. Thus, the drain terminal of the switching element 13-5 is connected to the positive terminal of the power source 11 via the power factor correction circuit 12, and the source terminal of the switching element 13-5 is connected to the drain terminal of the switching element 13-6. In addition, the source terminal of the switching element 13-6 is connected to the negative terminal of the power source 11 via the power factor correction circuit 12. Further, the source terminal of the switching element 13-6 and the drain terminal of the switching element 13-5 are connected via the capacitor 15 to one end of the transmitter coil 14, and the source terminal of the switching element 13-6 is connected to the other end of the transmitter coil 14. Further, the gate terminal of each switching element is connected to the gate driver 18-2.

If the output voltage from the power source 11 is less than the predetermined voltage, the control circuit 19 outputs a control signal to the gate driver 18-2 that switches OFF both switching elements 13-5, 13-6 of the inverter 13b. Then, the gate driver 18-2 applies a voltage to the respective gate terminals of the switching elements 13-5, 13-6 to switch them OFF. Otherwise, the control circuit 19 may control the ON/OFF switching of each switching element of the inverter 13a in the same manner as when the inverter 13 operates in the full-bridge mode in the above embodiment.

Otherwise, if the output voltage from the power source 11 is greater than the predetermined voltage, the control circuit 19 outputs a control signal to the gate driver 18-2 which switches OFF both the switching elements of the inverter 13a. Then, the gate driver 18-2 applies a voltage to the gate terminal of each switching element of the inverter 13a to switch OFF. Thus, to cause the inverter 13b to operate in a half-bridge mode, the control circuit 19 controls the switching elements 13-5 and 13-6 such that the switching element 13-5 and the switching element 13-6 alternately switch ON and the period during which the element 13-5 is ON and the period during which the element 13-6 is ON are equal within one time period that corresponds to the switching frequency.

Also according to this variant, among the inverters that supply alternating current to the transmitter coil 14, the control circuit 19 switches between the inverter 13a operating in a full-bridge mode and the inverter 13b operating in a half-bridge mode based on the input voltage to the power supply circuit 110. As a result, similarly to the above embodiment, the contactless power supply device having a power supply circuit according to this variant can perform a constant voltage output operation and increase the tolerance fluctuation range of the input voltage to the power supply circuit.

According to another variant, the power supply circuit may have a DC/DC converter between the power factor correction circuit and the inverter and may have a circuit for short-circuiting the DC/DC converter.

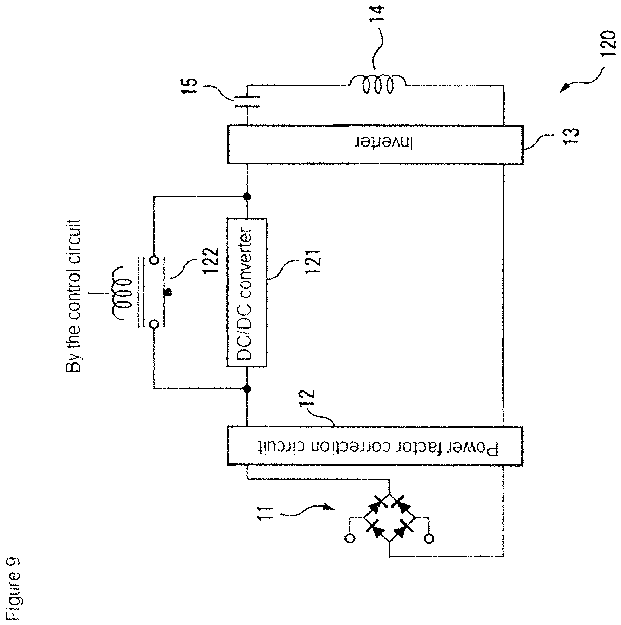

Figure 9 is a schematic diagram of a power supply circuit according to this variant. In this variant, the power supply circuit 120 has a power source 11, a power factor correction circuit 12, an inverter 13, a DC/DC converter 121, and a relay 122. According to this variant, the power supply circuit 120 is different from the power supply circuit 10 of the above embodiment in that it has a DC/DC converter 121 and a relay 122. This difference and related points will be explained below.

The DC/DC converter 121 is an example of a voltage converter which is connected between the power factor correction circuit 12 and the inverter 13. Thus, the DC/DC converter 121 steps down the DC voltage output from the power factor correction circuit 12. For example, the DC/DC converter 121 steps down to approximately 1/2 the DC voltage output from the power factor correction circuit 12. As a result, the DC/DC converter 121 may be a well-known step-down DC/DC converter.

The voltage output from the DC/DC converter 121 is input into the inverter 13.

The relay 122 is an example of a shorting circuit and is connected in parallel to the DC/DC converter 121. Thus, when the relay 122 is switched ON, the input and the output of the DC/DC converter 121 are short-circuited, so that the DC voltage output from the power factor correction circuit 12 is input into the inverter 13 without passing through the DC/DC converter 121.

If the output voltage from the power source 11 is less than the predetermined voltage, the control circuit 19 switches the relay 122 ON, so that the DC voltage output from the power factor correction circuit 12 is input into the inverter 13 without passing through the DC/DC converter 121. Otherwise, if the output voltage from the power source 11 is greater than the predetermined voltage, the control circuit 19 switches the relay 122 OFF, so that the DC voltage output from the power factor correction circuit 12 is input into the inverter 13 via the DC/DC converter 121. Further, if a DC voltage passing through the DC/DC converter 121 is input into the inverter 13, the power supply circuit 120 as a whole may step down the input voltage. Further, the control circuit 19 may cause the inverter 13 to operate in a full-bridge mode regardless of the output voltage from the power source 11.

Also according to this variant, depending on the input voltage to the power supply circuit 120, the control circuit 19 switches between short-circuiting or not short-circuiting the DC/DC converter 121, so that it is possible to adjust the degree of stepping up or stepping down of the voltage applied to the transmitter coil 14 with respect to this input voltage. As a result, as in the above embodiment, the contactless power supply device having a power supply circuit according to this variant can perform a constant voltage output operation and to increase the tolerance fluctuation range of the input voltage to the power supply circuit.

Further, the DC/DC converter 121 may be a step-up type DC/DC converter. In this case, if the output voltage from the power source 11 is less than the predetermined voltage, the control circuit 19 switches the relay 122 OFF, so that the DC voltage output from the power factor correction circuit 12 maybe input into the inverter 13 via the DC/DC converter 121. Otherwise, if the output voltage from the power source 11 is greater than the predetermined voltage, the control circuit 19 switches the relay 122 ON, so that the DC voltage output from the power factor correction circuit 12 may be input into the inverter 13 without passing through the DC/DC converter 121. In this case, the control circuit 19 is able cause the inverter 13 to operate in the half-bridge mode regardless of the output voltage from the power source 11.

According to still another variant, in the resonance circuit of the power receiving device, the receiver coil and the resonance capacitor may be connected in series similar to a series-series (SS) type contactless power supply device. In this case as well, the contactless power supply device can perform a constant voltage output operation, as in to the above embodiments and variants and may adjust the degree of stepping up or stepping down the voltage applied to the transmitter coil with respect to this input voltage.

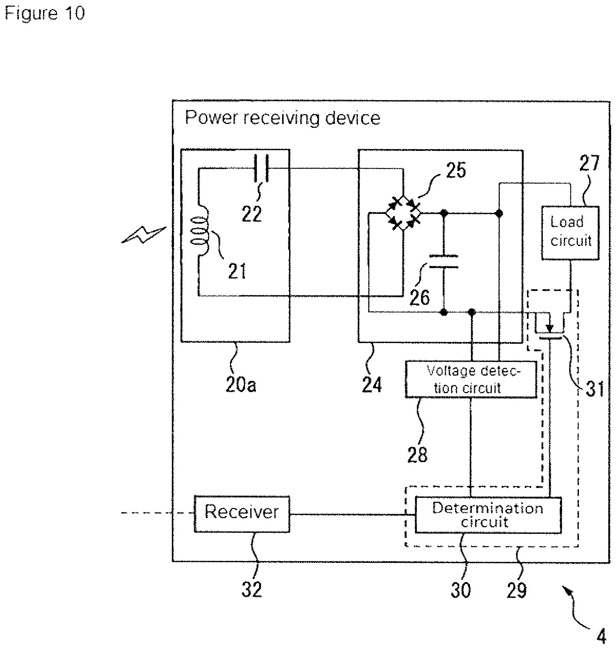

Figure 10 is a schematic diagram of a power receiving device according to this variant. The power receiving device 4 of this variant has a resonance circuit 20a having a receiver coil 21 and a resonance capacitor 22, a rectifying smoothing circuit 24, a load circuit 27, a voltage detection circuit 28, a constant voltage determination circuit 29, and a transmitter 32. According to this variant, the power receiving device 4 is different from the power receiving device 3 of the above embodiment in that the configuration of the resonance circuit 20a and coil 23 are omitted. This difference and related points will be explained below.

In the resonance circuit 20a, the receiver coil 21 and the resonance capacitor 22 are connected in series. Thus, the electric power received via the receiver coil 21 is output to the rectifying smoothing circuit 24 via the resonance capacitor 22 and the coil 23. As described above, since the contactless power supply device having the power receiving device 4 has the same configuration as that of the SS type, a constant voltage output operation can be performed. Further, unlike the SPL type contactless power supply device, in this example the resonance circuit 20a performs series resonance, so that the coil 23 may be omitted. Further, in contrast to the SS type, the contactless power supply device having the power receiving device 4 does not need to use the resonance of the transmitter coil 14 on the power transmission side. That is, the control circuit 19 of the power transmission device 2 may control the power supply circuit 10 to supply to the transmitter coil 14 alternating current having a switching frequency at which the transmitter coil 14 does not resonate, as in the above embodiment.

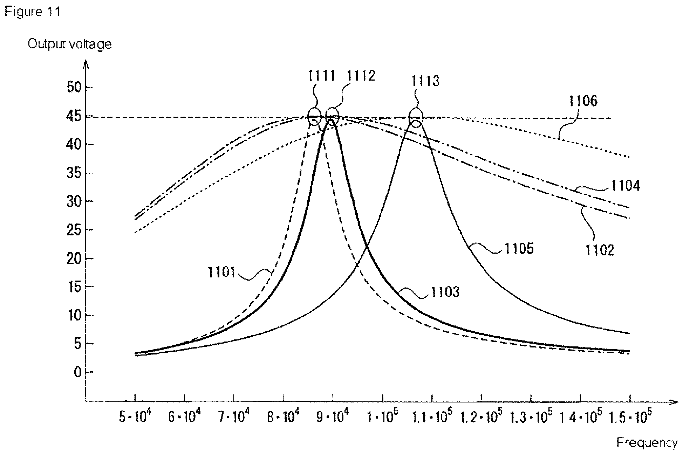

Figure 11 is a diagram showing an example of the simulation result of the frequency characteristics of the output voltage, when the voltage applied to the transmitter coil is varied according to the degree of coupling for a contactless power supply device that has the power receiving device 4 according to this variant and the power transmission device 2 in the above embodiment. In Fig. 11, the horizontal axis represents the frequency and the vertical axis represents the output voltage. Further, in this simulation, Lp = 174 µH, Cp = 20 nF, Ri = Ris = 0.1 Ω, n = 1, the voltage Vin = 300 V, and Ro = 10 Ω (Rac ≈ 8.1 Ω). The graph 1101 represents the output voltage frequency characteristics, when the degree of coupling k = 0.15, the equivalent AC resistance value of the load circuit 27 is Rac, and the voltage applied to the transmitter coil 14 is Vin. Further, the graph 1102 represents the output voltage frequency characteristics, when the degree of coupling k = 0.15, the equivalent AC resistance value of the load circuit 27 is (10 ^{∗} Rac), and the voltage applied to the transmitter coil 14 is Vin. Further, the graph 1103 represents the output voltage frequency characteristics, when the degree of coupling k = 0.3, the equivalent AC resistance value of the load circuit 27 is Rac, and the voltage applied to the transmitter coil is (0.5 ^{∗} Vin). In addition, the graph 1104 represents the output voltage frequency characteristics, when the degree of coupling k = 0.3, the equivalent AC resistance value of the load circuit 27 is (10 ^{∗} Rac), and the voltage applied to the transmitter coil is (0.5 ^{∗} Vin). Further, the graph 1105 represents the output voltage frequency characteristics, when the degree of coupling k = 0.6, the equivalent AC resistance value of the load circuit 27 is Rac, and the voltage applied to the transmitter coil is (0.25 ^{∗} Vin). Further, the graph 1106 represents the output voltage frequency characteristics, when the degree of coupling k = 0.6, the equivalent AC resistance value of the load circuit 27 is (10 ^{∗} Rac), and the voltage applied to the transmitter coil is (0.25 ^{∗} Vin).

As shown by points 1111 to 1113 in Fig. 11, in this variant, too, under the condition that the degree of coupling k does not vary for each value of the degree of coupling, the output voltage becomes substantially constant (that is, becomes a constant voltage output), even if the equivalent AC resistance value of the load circuit 27 varies, and there are combinations of frequency and output voltage. The respective output voltages of the points 1111 to 1113 are substantially equal.

As described above, even in a contactless power supply device having a power receiving device 4 and a power transmission device 2, and even if either the degree of coupling or the resistance value of the load circuit 27 fluctuates, the output voltage can be kept substantially constant by suitably adjusting the switching frequency and the voltage of the alternating current applied to the transmitter coil 14.

When in the above embodiment or variants, the receiver of the power transmission device and the transmitter of the power receiving device have a wired connection, the receiver and the transmitter respectively may have a communication circuit able to transmit signals including the determination information by wire.

As a result, those skilled in the art can make various modifications within the scope of the present claims in accordance with the embodiment to be implemented.

### [Explanation of symbols]

- 1: Contactless power supply device
- 2: Power transmission device
- 10, 110, 120: Power supply circuit
- 11: Power source
- 12: Power factor correction circuit
- 13, 13a, 13b: Inverter
- 13-1 to 13-6: Switching elements
- 14: Transmitter coil
- 15: Capacitor
- 16: Voltage detection circuit
- 17: Receiver
- 18-1, 18-2: Gate driver
- 19: Control circuit
- 121: DC/DC converter
- 122: Relay
- 3, 4: Power receiving device
- 20, 20a: Resonance circuit
- 21: Receiver coil
- 22: Resonance capacitor
- 23: Coil
- 24: Rectifying smoothing circuit
- 25: Full wave rectifier circuit
- 26: Smoothing capacitor
- 27: Load circuit
- 28: Voltage detection circuit
- 29: Constant voltage determination circuit
- 30: Determination circuit
- 31: Switching element
- 32: Transmitter

## Claims

1. A contactless power supply device (1) comprising a power transmission device (2) and a power receiving device (3) to which electrical power is transmitted from the power transmission device (2) in a contactless manner,
wherein the power transmission device (2) includes:
a transmitter coil (14) which supplies electric power to the power receiving device (3);
a power supply circuit (10) which supplies an alternating current, obtained by stepping up or stepping down the input voltage, to the transmitter coil (14),
a voltage detection circuit (16) which measures the input voltage to the power supply circuit (10); and
a control circuit (19) which controls the degree of stepping up or stepping down the input voltage, by the power supply circuit (10), with respect to the measured input voltage based on the measured input voltage;
and the power receiving device (3) includes:
a receiver coil (21) that receives electric power from the transmission device (2), a resonance circuit (20) having a resonance capacitor (22) which resonates with the receiver coil 21 in accordance with the electric power from the transmission device (2), and
a rectification circuit (24) which rectifies the electric power output from the resonance circuit (20), wherein the power supply circuit (10) includes:
a power factor correction circuit (12) which steps up the input voltage and outputs direct current, and
an inverter (13) which converts the direct current that is output from the power factor correction circuit (12) into an alternating current,
wherein the control circuit (19) causes the inverter (13) to operate in a full-bridge mode, if the measured input voltage is less than a predetermined voltage, and causes the inverter (13) to operate in a half-bridge mode, if the measured input voltage is greater than the predetermined voltage.

2. A contactless power supply device (1) comprising a power transmission device (2) and a power receiving device (3) to which electrical power is transmitted from the power transmission device (2) in a contactless manner,
wherein the power transmission device (2) includes:
a transmitter coil (14) which supplies electric power to the power receiving device (3);
a power supply circuit (10) which supplies an alternating current, obtained by stepping up or stepping down the input voltage, to the transmitter coil (14),
a voltage detection circuit (16) which measures the input voltage to the power supply circuit (10); and
a control circuit (19) which controls the degree of stepping up or stepping down the input voltage, by the power supply circuit (10), with respect to the measured input voltage based on the measured input voltage; and the power receiving device (3) includes:
a receiver coil (21) that receives electric power from the transmission device (2), a resonance circuit (20) having a resonance capacitor (22) which resonates with the receiver coil 21 in accordance with the electric power from the transmission device (2), and
a rectification circuit (24) which rectifies the electric power output from the resonance circuit (20), wherein the power supply circuit (10) includes:
a power factor correction circuit (12) which steps up the input voltage and outputs direct current,
a voltage converter (121) which steps up or steps down the voltage of the direct current output from the power factor correction circuit (12),
an inverter (13) which converts the direct current output from the voltage converter (121) into alternating current,
and a switchable shorting circuit (122) which short-circuits the voltage converter (121) or not,
wherein the control circuit (19) controls the shorting circuit (122) to short-circuit the voltage converter (121) based on the measured input voltage, wherein the voltage converter (121) steps down the voltage of the direct current output from the power factor correction circuit (12), and
the control circuit (19) controls the shorting circuit (122) to short-circuit the voltage converter (121), if the measured input voltage is less than a predetermined voltage, and controls the shorting circuit (122) not to short-circuit, if the measured input voltage is greater than the predetermined voltage.

## Patentansprüche

1. Kontaktlose Energieversorgungsvorrichtung (1) mit einer Energieübertragungseinrichtung (2) und einer Energieempfangseinrichtung (3), zu der elektrische Energie von der Energieübertragungseinrichtung (2) kontaktlos übertragen wird,
wobei die Energieübertragungseinrichtung (2) umfasst:
eine Übertragungsspule (14), die der Energieempfangseinrichtung (3) elektrische Energie zuführt;
eine Stromversorgungsschaltung (10), die der Übertragungsspule (14) einen Wechselstrom, der durch Erhöhen oder Verringern der Eingangsspannung erhalten wird, liefert,
eine Spannungserfassungsschaltung (16), die die Eingangsspannung zu der Stromversorgungsschaltung (10) misst; und
eine Steuerschaltung (19), die den Grad des Erhöhens oder Verringerns der Spannung durch die Stromversorgungsschaltung (10) in Bezug auf die gemessene Eingangsspannung auf der Grundlage der gemessenen Eingangsspannung steuert;
und wobei die Energieempfangseinrichtung (3) umfasst:
eine Empfängerspule (21), die elektrische Energie von der Übertragungseinrichtung (2) empfängt, einen Resonanzkreis (20) mit einem Resonanzkondensator (22), der mit der Empfängerspule (21) in Übereinstimmung mit der elektrischen Energie von der Übertragungseinrichtung (2) schwingt, und
eine Gleichrichterschaltung (24), die die von dem Resonanzkreis (20) abgegebene elektrische Energie gleichrichtet, wobei die Stromversorgungsschaltung (10) enthält:
eine Energiefaktorkorrekturschaltung (12), die die Eingangsspannung erhöht und Gleichstrom ausgibt, und
einen Wechselrichter (13), der den Gleichstrom, der von der Energiefaktorkorrekturschaltung (12) ausgegeben wird, in einen Wechselstrom umwandelt,
wobei die Steuerschaltung (19) den Wechselrichter (13) dazu veranlasst, in einem Vollbrückenmodus zu arbeiten, wenn die gemessene Eingangsspannung kleiner als eine vorbestimmte Spannung ist, wobei die vorbestimmte Spannung auf einen Minimalwert einer Ausgangsspannung von einer Energiequelle (11) eingestellt ist, die elektrische Energie als die Eingangsspannung an die Energiefaktorkorrekturschaltung (12) liefert, und den Wechselrichter (13) dazu veranlasst, in einem Halbbrückenmodus zu arbeiten, wenn die gemessene Eingangsspannung größer als die vorbestimmte Spannung ist.

2. Kontaktlose Energieversorgungsvorrichtung (1) mit einer Energieübertragungseinrichtung (2) und einer Energieempfangseinrichtung (3), zu der elektrische Energie von der Energieübertragungseinrichtung (2) kontaktlos übertragen wird,
wobei die Energieübertragungseinrichtung (2) umfasst:
eine Übertragungsspule (14), die der Energieempfangseinrichtung (3) elektrische Energie zuführt;
eine Stromversorgungsschaltung (10), die der Übertragungsspule (14) einen Wechselstrom, der durch Erhöhen oder Verringern der Eingangsspannung erhalten wird, liefert,
eine Spannungserfassungsschaltung (16), die die Eingangsspannung zu der Stromversorgungsschaltung (10) misst; und
eine Steuerschaltung (19), die den Grad des Erhöhens oder Verringerns der Spannung durch die Stromversorgungsschaltung (10) in Bezug auf die gemessene Eingangsspannung auf der Grundlage der gemessenen Eingangsspannung steuert;
und wobei die Energieempfangseinrichtung (3) umfasst:
eine Empfängerspule (21), die elektrische Energie von der Übertragungseinrichtung (2) empfängt, einen Resonanzkreis (20) mit einem Resonanzkondensator (22), der mit der Empfängerspule (21) in Übereinstimmung mit der elektrischen Energie von der Übertragungseinrichtung (2) schwingt, und
eine Gleichrichterschaltung (24), die die von dem Resonanzkreis (20) abgegebene elektrische Energie gleichrichtet, wobei die Stromversorgungsschaltung (10) enthält:
eine Energiefaktorkorrekturschaltung (12), die die Eingangsspannung erhöht und Gleichstrom ausgibt,
einen Spannungswandler (121), der die Spannung des von der Energiefaktorkorrekturschaltung (12) ausgegebenen Gleichstroms erhöht oder verringert,
einem Wechselrichter (13), der den vom Spannungswandler (121) abgegebenen Gleichstrom in Wechselstrom umwandelt,
und eine schaltbare Kurzschlussschaltung (122), die den Spannungswandler (121) kurzschließt oder nicht,
wobei die Steuerschaltung (19) den Kurzschluss (122) zum Kurzschließen des Spannungswandlers (121) auf der Grundlage der gemessenen Eingangsspannung steuert, wobei der Spannungswandler (121) die Spannung des von der Energiefaktorkorrekturschaltung (12) ausgegebenen Gleichstroms herabsetzt, und
Wobei die Steuerschaltung (19) die Kurzschlussschaltung (122) steuert, um den Spannungswandler (121) kurzzuschließen, wenn die gemessene Eingangsspannung kleiner als eine vorbestimmte Spannung ist, wobei die vorbestimmte Spannung auf einen minimalen Wert einer Ausgangsspannung von einer Energiequelle (11) eingestellt ist, die elektrische Energie als die Eingangsspannung an die Energiefaktorkorrekturschaltung (12) liefert, und die Kurzschlussschaltung (122) so steuert, dass sie nicht kurzschließt, wenn die gemessene Eingangsspannung größer als die vorbestimmte Spannung ist.

## Revendications

1. Dispositif d'alimentation en puissance sans contact (1) comprenant un dispositif de transmission de puissance (2) et un dispositif de réception de puissance (3) auquel une puissance électrique est transmise sans contact depuis le dispositif de transmission de puissance (2),
dans lequel le dispositif de transmission de puissance (2) comporte :
une bobine émettrice (14) qui alimente en puissance électrique le dispositif de réception de puissance (3) ;
un circuit d'alimentation en puissance (10) qui alimente en courant alternatif, obtenu par élévation ou abaissement de la tension fournie en entrée, la bobine émettrice (14),
un circuit de détection de tension (16) qui mesure la tension fournie en entrée au circuit d'alimentation en puissance (10) ; et
un circuit de commande (19) qui commande le degré d'élévation ou d'abaissement de la tension fournie en entrée, par le circuit d'alimentation en puissance (10), par rapport à la tension fournie en entrée mesurée d'après la tension fournie en entrée mesurée ;
et le dispositif de réception de puissance (3) comporte :
une bobine réceptrice (21) qui reçoit une puissance électrique provenant du dispositif de transmission (2), un circuit de résonance (20) ayant un condensateur à résonance (22) qui résonne avec la bobine réceptrice (21) conformément à la puissance électrique provenant du dispositif de transmission (2), et
un circuit de redressement (24) qui redresse la puissance électrique fournie en sortie depuis le circuit de résonance (20), dans lequel le circuit d'alimentation en puissance (10) comporte :
un circuit de correction de facteur de puissance (12) qui élève la tension fournie en entrée et fournit en sortie un courant continu, et
un onduleur (13) qui convertit le courant continu qui est fourni en sortie depuis le circuit de correction de facteur de puissance (12) en un courant alternatif,
dans lequel le circuit de commande (19) amène l'onduleur (13) à fonctionner en mode pont entier, si la tension fournie en entrée mesurée est inférieure à une tension prédéterminée, et amène l'onduleur (13) à fonctionner en mode demi-pont, si la tension fournie en entrée mesurée est supérieure à la tension prédéterminée.

2. Dispositif d'alimentation en puissance sans contact (1) comprenant un dispositif de transmission de puissance (2) et un dispositif de réception de puissance (3) auquel une puissance électrique est transmise sans contact depuis le dispositif de transmission de puissance (2),
dans lequel le dispositif de transmission de puissance (2) comporte :
une bobine émettrice (14) qui alimente en puissance électrique le dispositif de réception de puissance (3) ;
un circuit d'alimentation en puissance (10) qui alimente en courant alternatif, obtenu par élévation ou abaissement de la tension fournie en entrée, la bobine émettrice (14),
un circuit de détection de tension (16) qui mesure la tension fournie en entrée au circuit d'alimentation en puissance (10) ; et
un circuit de commande (19) qui commande le degré d'élévation ou d'abaissement de la tension fournie en entrée, par le circuit d'alimentation en puissance (10), par rapport à la tension fournie en entrée mesurée d'après la tension fournie en entrée mesurée ;
et le dispositif de réception de puissance (3) comporte :
une bobine réceptrice (21) qui reçoit une puissance électrique provenant du dispositif de transmission (2), un circuit de résonance (20) ayant un condensateur à résonance (22) qui résonne avec la bobine réceptrice (21) conformément à la puissance électrique provenant du dispositif de transmission (2), et
un circuit de redressement (24) qui redresse la puissance électrique fournie en sortie depuis le circuit de résonance (20), dans lequel le circuit d'alimentation en puissance (10) comporte :
un circuit de correction de facteur de puissance (12) qui élève la tension fournie en entrée et fournit en sortie un courant continu,
un convertisseur de tension (121) qui élève ou abaisse la tension du courant continu fourni en sortie depuis le circuit de correction de facteur de puissance (12),
un onduleur (13) qui convertit le courant continu fourni en sortie depuis le convertisseur de tension (121) en courant alternatif,
et un circuit de court-circuitage commutable (122) qui court-circuite le convertisseur de tension (121) ou non,
dans lequel le circuit de commande (19) commande le circuit de court-circuitage (122) pour court-circuiter le convertisseur de tension (121) d'après la tension fournie en entrée mesurée, dans lequel le convertisseur de tension (121) abaisse la tension du courant continu fourni en sortie depuis le circuit de correction de facteur de puissance (12), et
le circuit de commande (19) commande le circuit de court-circuitage (122) pour court-circuiter le convertisseur de tension (121), si la tension fournie en entrée mesurée est inférieure à une tension prédéterminée, et commande le circuit de court-circuitage (122) pour ne pas court-circuiter, si la tension fournie en entrée mesurée est supérieure à la tension prédéterminée.
